# EUROPEAN PATENT APPLICATION

(11) **EP 1 389 839 A1**
(43) Date of publication of application: **18.02.2004**
(21) Application number: 01936858.8
(22) Date of filing: 05.06.2001
(51) Int. Cl.: H04B 10/12, H04J 14/02, G02B 6/28

(54) **OPTICAL COMMUNICATION METHOD AND OPTICAL COMMUNICATION SYSTEM**

(30) Priority: 15.05.2001 JP 2001144051
(71) Applicant: Kabushiki Kaisha Sogo Kaihatsu Jimusho, Ichinomiya-shi, Aichi 491-0905 (JP); Hiramatsu, Shuji, Hashima-shi, Gifu 501-6312 (JP); Mouri, Hajime, Hashima-shi, Gify 501-6251 (JP)
(72) Inventor: MOURI, Hajime, Hashima-shi, Gifu 501-6251 (JP)
(74) Representative: Senior, Alan Murray
(86) International application number: PCT/JP2001/004752
(87) International publication number: WO 2002/093793

(57) **Abstract**

Optical transmitters 12 in a plurality of nodes 7 connected via an optical fiber 9a individually modulate intensities of a plurality of spectral lines whose wavelengths are different thereby generating respective optical signals and transmitting themthrough the same optical fibers 9a, where amultiple spectral line, in which the plurality of spectral lines are superimposed, is transmitted, and optical receivers 13 in the nodes 7 receive themultiplex spectral line transmitted through the optical fiber 9a, separates the multiplex spectral line into a plurality of spectral lines whose wavelengths are different, and detects optical signals for separated spectral lines.

## Description

### Technical Field

This invention relates to an optical communication method and an optical communication system.

### Background Art

Conventionally, optical communications, which conduct communications by transmitting optical signals through optical fibers, have been put in practical use. Conventional optical communications are structured such as to transmit optical signals through the use of semiconductor lasers by causing total internal reflection of laser beams within an optical fiber in repetition.

Especially in recent years, to cope with expansion of demand for communications with the rapid widespread of the use of the Internet, a development of optical transmission systems which adopt the so-called wavelength division multiplex (WDM) method, in which communications are conducted by multiplexing a plurality of laser beams whose wavelengths are different, has been briskly conducted.

In this wavelength division multiplex method, using a plurality of laser diodes that emit laser beams of varying wavelengths, the laser beams of each wavelength is modulated based on transmission information on the transmission side, and optical signals formed of the laser beams of a plurality of wavelengths are transmitted in a state where they are multiplexed within a transmission path of an optical fiber. On the other hand, on the reception side, the aforementioned transmission information is received by separating the multiplexed light outputted from the optical fiber for every wavelength to read optical signals.

However, in the conventional wavelength division multiplex method, a high precision is required for multiplexing laser beams whose wavelengths are different and separating a multiplexed light into laser beams of predetermined wavelengths, and complicated and expensive devices are needed.

That is, in the transmitting part of each node connected to the optical fiber, a multiplexing device for combining laser beams of different wavelengths into a single multiplexed light beam is structured by combination of a plurality of lenses and mirrors precisely, so that there is a problem that the structure of the multiplexing device is complicated and expensive.

On the other hand, in a receiving part of each node, a high precision is required for condensing multiplexed light, which is multiplexed in the optical fiber by lenses or the like and hitting the light on an effective portion of a pin photodiode, so that there is a problem that a complicated and expensive light receiving device is needed. Furthermore, the receiving part is structured such that lenses are disposed such that light is orthogonal to a transmission direction during transmission through the optical fiber and condensed, as attenuation occurs when optical signals pass through lenses, it is necessary to install light amplifiers at a lot of places if the optical signals are transmitted over a long distance, and there is a drawback that it costs.

And, that it costs a great deal of money for facilities required for optical communications as described above is a big bottleneck in diffusion of optical fiber communication network.

### Disclosure of Invention

The purpose of the invention is to provide an optical communication method and an optical communication system that can perform high speed and mass optical communications with simple and inexpensive structure using optical fibers.

To attain this purpose, an optical communication method of this invention is for which performs communications between a transmission side and a reception side via a light transmission path that can transmit optical signals. Especially, on the transmission side, intensities of a plurality of spectral lines whose wavelengths are different are modified individually, so that respective optical signals are generated and sent through the same light transmission path. Through the light transmission path, a multiplex spectral line in which the plurality of spectral lines are superimposed is transmitted. On the reception side, the multiplex spectral line, which is transmitted through the light transmission path, is received, and separated into a plurality of spectral lines whose wavelengths are different, and optical signals are detected for each of the separated spectral lines.

Thus, since the optical signals are transmitted through the same light transmission path according to the spectral lines whose wavelengths are different, a large amount of transmission information can be transmitted through one light transmission path. In addition, as the optical signals of the plurality of spectral lines are used, they can be easily superimposed through the light transmission path, and transmitted as an optical light of a multiplex spectral line. Furthermore, the multiplex spectral line transmitted through the light transmission path can be separated into a plurality of spectral lines very easily using a spectroscope or the like, and optical signals can be detected for each of the spectral lines.

A preferred embodiment of an optical communication method of the invention is characterized in that, on the reception side, the multiplex spectral line is received at a side of the light transmission path.

Thus, as there is no need to install a lens, which causes attenuation of light, in the middle of the light transmission path, attenuation of the optical signal according to the multiplex spectral line can be controlled extremely low. Accordingly, when the optical signal is transmitted over a long distance, it is possible to decrease the number of light amplifiers in the middle of the light transmission path.

Further, a preferred embodiment of an optical communication method of the invention is characterized in that, on the transmission side, natural light is generated by a light source, and a spectral line of a specified wavelength extracted from the natural light is used.

Thus, on the transmission side, using a simple and inexpensive device including a light source that emits natural light such as a light-emitting diode and a spectroscope that extracts spectral lines of a specified wavelength, a plurality of spectral lines whose wavelengths are different can be easily obtained.

In addition, an optical communication system of the invention is for which carries out communications between a plurality of optical transmitters and one or more optical receivers via a light transmission path that can transmit an optical light. Especially, each of the optical transmitters a light source that emits natural light, a modulating device that modulates intensity of the natural light the light source emits based on transmission information, andan extracting device that extracts a spectral line of a specified wavelength from the natural light, and is structured such as to transmit optical signals by the spectral line of the specified wavelength modulated by the modulating device and extracted by the extracting device through the light transmission path. The light transmission path is structured such as to transmit a multiplex spectral line in which a plurality of spectral lines transmitted from the plurality of optical transmitters are superimposed. The optical receivers includes a light receiving part that receives the multiplex spectral line transmitted through the light transmission path, a separating device that separates the multiplex spectral line received by the light receiving part into a plurality of spectral lines whose wavelengths are different, and a detecting device that detects optical signals for each spectral line separated by the separating device.

Thus, on the optical transmitters, the light source emits natural light, and the modulating device modulates intensity of the natural light emitted by the light source based on transmission information. The extracting device extracts a spectral line of a specified wavelength from the natural light, and optical signals by the spectral line of the specified wavelength is transmitted through the light transmission path. The light transmission path transmits a multiplex spectral line in which a plurality of spectral lines transmitted from the plurality of optical transmitters are superimposed. On the other hand, on the optical receivers, the light receiving part receives the multiplex spectral line transmitted through the light transmission path, and the separating device separates the multiplex spectral line received by the light receiving part into a plurality of spectral lines whose wavelengths are different. The detecting device detects optical signals for each spectral line separated by the separating device.

Thus, as optical signals by a plurality of spectral lines whose wavelengths are different can be sent out and transmitted through the same light transmission path, a large amount of transmission information can be transmitted through one light transmission path. In addition, as the optical signals of the plurality of spectral lines are used, they can be easily superimposed through the light transmission path, and transmitted as an optical light of a multiplex spectral line. Furthermore, the multiplex spectral line transmitted through the light transmission path can be separated into a plurality of spectral lines very easily using a spectroscope or the like, and optical signals can be detected for each of the spectral lines.

A preferred embodiment of an optical communication system of the invention is characterized in that the optical receivers are structured so as to receive the multiplex spectral line at a side of the light transmission path.

Thus, as there is no need to install a lens, which causes attenuation of light, in the middle of the light transmission path, attenuation of the optical signal according to the multiplex spectral line can be controlled extremely low. Accordingly, when the optical signal is transmitted over a long distance, it is possible to decrease the number of light amplifiers in the middle of the light transmission path.

In addition, an optical transceiver of the invention is for use with an optical communication method that carries out communications by superimposing a plurality of spectral lines whose wavelengths are different through a light transmission path. Especially, it includes a light source that emits natural light, a modulating device that modulates an intensity of the natural light the light source emits based on transmission information, and an extracting device that extracts a spectral line of a specified wavelength from the natural light. It is structured to transmit optical signals by the spectral line of the specified wavelength modulated by the modulating device and extracted by the extracting device through the light transmission path.

Thus, the light source emits the natural light, and the modulating device modulates the intensity of the natural light the light source emits based on the transmission information. The extracting device extracts the spectral line of the specified wavelength from the natural light, and the optical signals by the spectral line of the specified wavelength are transmitted through the light transmission path. Accordingly, an optical transceiver that transmits optical signals made of a spectral line of a specified wavelength can be realized with a very simple structure.

In addition, an optical receiver of the invention is for use with an optical communication method that carries out communications by transmitting a multiplex spectral line in which a plurality of spectral lines whose wavelengths are different are superimposed through a light transmission path. It includes a light receiving part that receive the multiplex spectral line transmitted through the light transmission path, a separating device that separates the multiplex spectral line received by the light receiving part into a plurality of spectral lines whose wavelengths are different, and a detecting device that detects optical signals for each spectral line separated by the separating device.

Thus, the light receiving part receives the multiplex spectral line transmitted through the light transmission path, and the separating device separates the multiplex spectral line received by the light receiving part into a plurality of spectral lines whose wavelengths are different. The detecting device detects optical signals for each spectral line separated by the separating device. Accordingly, it is possible to detect optical signals can be detected for each spectral line separated from a plurality of spectral lines with a very simple structure.

In addition, a preferred embodiment of an optical receiver of the invention is characterized in that it is structured so as to receive the multiplex spectral line at a side of the light transmission path.

Thus, as there is no need to install a lens, which causes attenuation of light, in the middle of the light transmission path, attenuation of the optical signal according to the multiplex spectral line can be controlled extremely low. Accordingly, when the optical signals are transmitted over a long distance, it is possible to decrease the number of light amplifiers in the middle of the light transmission path.

In addition, an optical fiber of the invention is for use with an optical communication method that carries out communications by transmitting a plurality of spectral lines whose wavelengths are different through a light transmission path. Especially, it includes a first light transmission path that transmits first optical signals by a spectral line of a specified single wavelength, a second light transmission path that transmits second optical signals by a spectral line of another specified single wavelength or a plurality of wavelengths, and a third light transmission path that communicates the first light transmission path and the second light transmission path and transmits third optical signals by a multiplex spectral line in which the first optical signals and the second optical signals are superimposed. The third light transmission path is formed such that a core diameter and a clad diameter are gradually reduced toward downstream of a transmission direction of the optical light by the multiplex spectral line.

Thus, the first light transmission path transmits first optical signals by a spectral line of a specified single wavelength, the second light transmission path transmits second optical signals by a spectral line of another specified single wavelength or a plurality of wavelengths, and the third light transmission path superimposes the first optical signals and the second optical signals evenly, and transmits an excellent multiplex spectral line free of deviation in light intensity for every wavelength. As a result, the multiplex spectral line transmitted via the third light transmission path is received, separated into spectral lines of a plurality of wavelengths, so that the optical signals for each spectral line can be reliably detected.

In addition, a preferred embodiment of an optical fiber of the invention is characterized in that the third light transmission path is formed such that, at a most upstream portion in the transmission direction of the optical signals by the multiplex spectral line, its core diameter is greater than a core diameter of the first light transmission path and a core diameter of the second light transmission path, and its clad diameter is greater than a clad diameter of the first light transmission path and a clad diameter of the second light transmission path.

Thus, the first optical signals and the second optical signals are transmitted by the first light transmission path and the second light transmission path respectively, andinputted to the most upstream portion of the third light transmission path where its core diameter and clad diameter are larger than those in these light transmission paths, so that the third light transmission path can superimpose the first optical signals and the second optical signals evenly to generate an excellent multiplex spectral line free of deviation in light intensity for every wavelength.

In addition, a preferred embodiment of an optical fiber of the invention is characterized in that it is formed such that the core diameter of the third light transmission path is reduced with a ratio of about 12.5 µm or less to a length of 1 m of the transmission direction.

Thus, a multiplex spectral line where the first optical signals and the second optical signals are superimposed evenly can be generated in the third light transmission path and the multiplex spectral line can be smoothly transmitted to a light transmission path communicated to a downstream side of the third light transmission path.

### Brief Description of Drawings

FIG. 1 shows an entire structure of an optical communication network of an embodiment of the invention.
FIG. 2 shows a structure of middle distance connection line and circles.
FIG. 3 is a block diagram showing a structure of a node.
FIG. 4 is an illustration showing connection between a transceiver unit and an optical fiber.
FIG. 5 is an illustration showing a structure of an optical fiber.
FIG. 6 is a block diagram showing a structure of an optical transmitter and an optical receiver.
FIG. 7 is an illustration showing a cell generation processing and a cell termination processing.
FIG. 8 is a block diagram showing a structure of a coupling device .
FIG. 9 is an illustration showing a flow of information in case of that the destination is a node in the same circle.
FIG. 10 is an illustration showing a flow of information in case of that the destination is a node on the other circle.
FIG. 11 is an illustration showing the time division multiplexing of seven-wavelength spectral lines.
FIG. 12 is an illustration showing connection of the optical fiber at the time of occurrence of a failure.

### Best Mode for Carrying Out the Invention

The following describes the optical communication network 1 which embodies an optical communication method and an optical communication system of this invention referring to drawings.

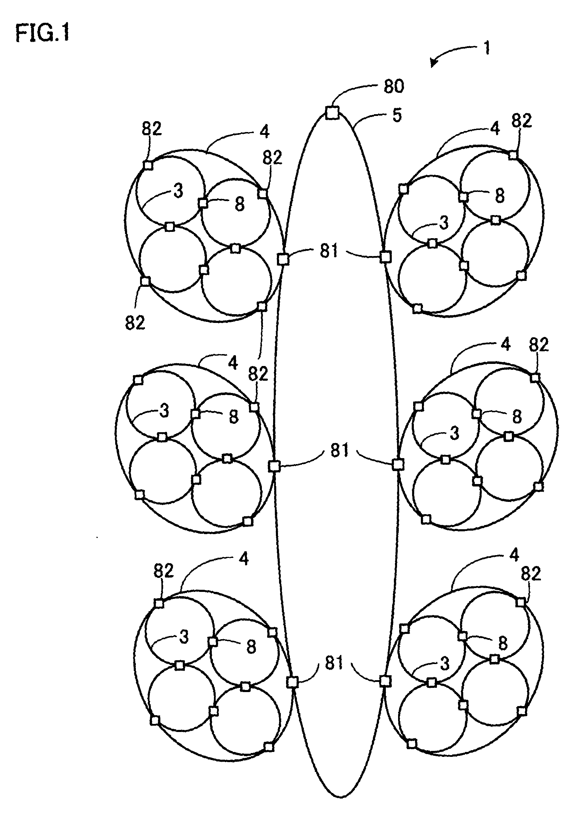

First, the entire structure of the optical communication network 1 will be described with reference to FIG. 1.

As shown in FIG. 1, the optical communication network 1 comprises a circle 3 as a short distance connection line that consists of a looped optical fiber, a middle distance connection circle 4 that is connected with a plurality of circles 3 via coupling devices 82 and forms a loop bigger than the circle 3, and a long distance connection lines 5 that is connected with a plurality of middle distance connection lines 4 via coupling devices 81 and forms a loop bigger than the middle distance connection circle 4. Here, a circle means a basic element unit of a network in the optical communication network 1, and the middle distance connection line 4 and long-distance connection lines 5 are also a form of a circle that connects coupling devices 81, 82 which are a type of nodes.

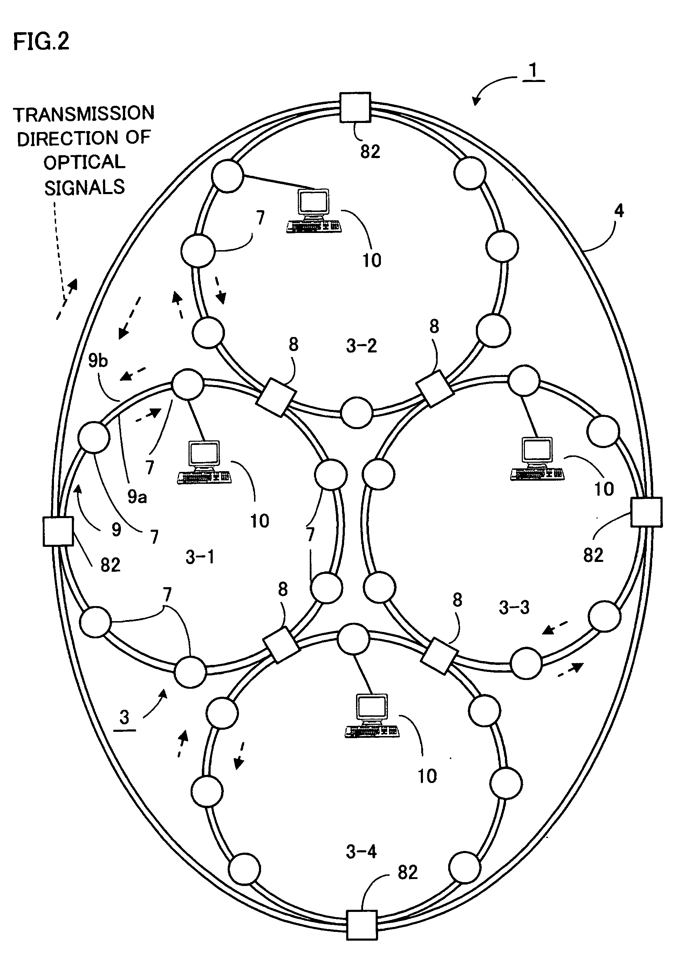

More specifically, as shown in FIG. 2, each circle 3 comprises a plurality of nodes 7 connected in a loop by optical fibers 9. Here, in FIG. 2, each circle 3 is given branch numbers like 3-1 to 3-4 to distinguish each other, and these have similar structures. Hereinafter, only when each circle needs to be distinguished, the descriptions are made with the branch numbers 1 to 4, and in other cases, the branch numbers are omitted, and the circles are indicated just as the circles 3. Much the same is true on other elements.

Using optical fibers 9 comprising two looped optical fibers 9a and 9b whose lengths are about 15 km, a maximum of 700 nodes 7 are connected to each circle 3. Since each node 7 is installed in each home or building, over ten meters of optical fibers 9a and 9b per node is used for lead-in, and a circle 3 will cover areas in about 2km of circumferences in actual use. Moreover, various terminals 10, such as a personal computer, a telephone, and facsimile, are connected to each node 7. Typically, a circle 3 is used as a local communication network for every block obtained by dividing a city into several blocks or dozens of blocks, or a local area network (LAN) in an office building.

The reason that the length of the optical fiber 9 is set to 15 km is based on a relationship between a light intensity of an LED, which is a light source of an optical transmitter 12, which will be described later, and a light-receiving sensitivity of an optical receiver 13. Namely, although an optical pulse emitted from one node 7 in the circle 3 into the optical fiber 9 goes around the inside of the looped optical fiber 9 and returns to the node 7, the sensitivity of the optical receiver 13 is set in consideration of a light intensity level, which is transmitted over 15 km in the optical fiber 9 and attenuated, so that the optical pulse, which has been already detected as signal lights by optical receivers of each node 7 on the first round, may not be doubly detected on the second round.

The two optical fibers 9a and 9b constituting the looped optical fiber 9 form the double circles whose transmission directions of optical signals differ. For example, the transmission direction of the optical signals in the circle 3-1 is a clockwise direction in the optical fiber 9a, and is a counterclockwise direction in the optical fiber 9b.

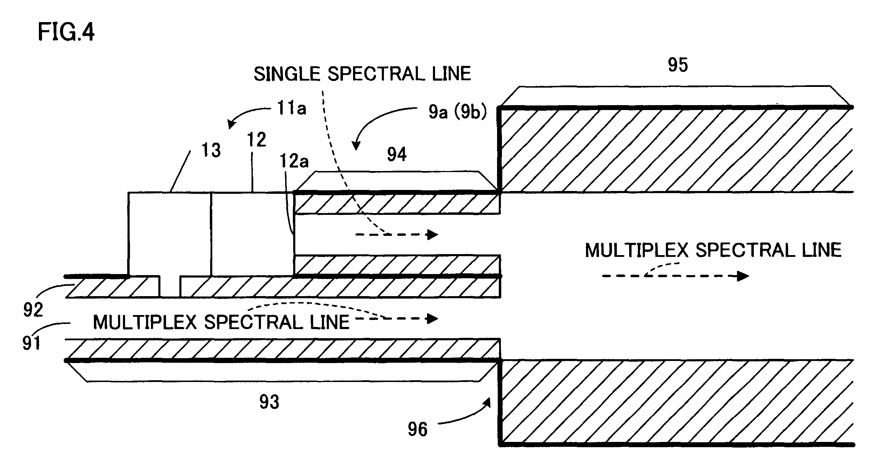

Like what is widely used in the optical communications field, the optical fiber 9 is made of glass material, such as quartz glass, and includes a core 91 formed in the circumference of a shaft center, a clad 92 made of glass material with a refractive index smaller than that of the core 91 and covering the core 91, and a covering 90 made of resin material and covering the clad 92 (refer to FIG. 4).

The adjoining circles 3 are connected via the coupling devices 8. In the optical communication network 1 of FIG. 2, the circles 3-1 and 3-2, the circles 3-2 and 3-3, the circles 3-3 and 3-4, and the circles 3-4 and 3-1 are connected with each other via the coupling devices 8.

The middle distance connection line 4 is a loop circuit where relay servers, which are not illustrated, for amplifying optical signals are disposed every about 15 km in order to transmit optical signals over a middle distance of a unit of a city, a rural district, or a prefecture, and comprises the two looped optical fibers 9a and 9b, as is the case with the circles 3 mentioned above. The middle distance connection line 4 is connected with the circles 3 via respective coupling devices 82.

On the other hand, the long-distance connection line 5 is a loop circuit where relay servers, which are not illustrated, are disposed every about 15 km, in order to transmit optical signals over a long distance such as a country unit, and comprises the two looped optical fibers 9a and 9b as is the case with the circles 3 or the middle distance connection line 4 mentioned above. The long-distance connection line 5 is connected with the middle distance connection lines 4 via the coupling devices 81, as shown in FIG. 1.

Moreover, a master oscillator 80 including a cesium atom oscillator is connected on the long-distance connection line 5. The master oscillator 80 is constructed such as to transmit synchronizing signals on the long-distance connection line 5 in the form of optical signals, and the optical communication network 1 provides for network synchronization by a master-slave timing system based on the synchronizing signals from the master oscillator 80. More specifically, since slave oscillators are provided in coupling devices 81 and 82 and such slave oscillators generate synchronizing signals based on the synchronizing signals from the master oscillator 80, so that synchronization is achieved on each level of the circle 3, the middle distance connection line 4, and the long-distance connection line 5. In addition, the synchronizing signals are transmitted after data similar to a 5-bytes header, which is a part of a cell described later, is developed into optical signals.

The circles 3, the middle distance connection lines 4, and the long-distance connection line 5 are designed to transmit optical signals using light source of the light intensity corresponding to the length of each line. Therefore, the light intensity of the optical signals in each line is higher in order of the circles 3, the middle distance connection lines 4, and the long-distance connection line 5.

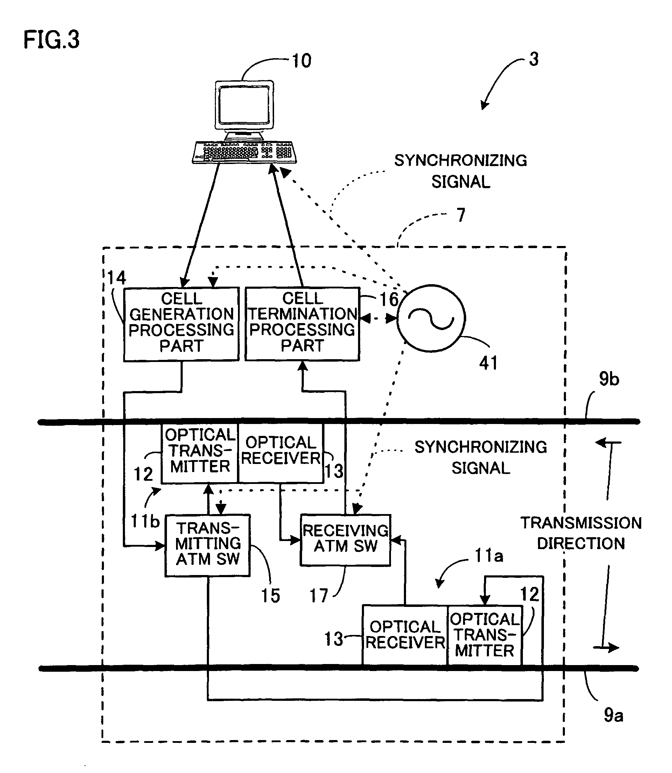

Next, structures of the nodes 7 and optical fibers 9a and 9b will be described with reference to FIGS. 3 to 5.

As shown in FIG. 3, a node 7 comprises the transceiver units 11a and 11b connected to optical fibers 9a and 9b, respectively, the cell generation processing part 14, the cell termination processing part 16, a transmitting ATM switch 15, a receiving ATM switch 17, and a slave oscillator 41.

The transceiver unit 11a comprises the optical transmitter 12 that sends out the optical signals to the optical fiber 9a, and the optical receiver 13 that receives the optical signals from the optical fiber 9a. Hereafter, the structures of the transceiver unit 11a and the optical fiber 9a will be described with reference to FIGS. 4 to 6. In addition, since the transceiver unit 11b is a device having the same structure and function as the transceiver unit 11a connected to the optical fiber 9b, description is omitted.

FIG. 4 shows the structure in the vicinity of the connection between the transceiver unit 11a and the optical fiber 9a.

As described above, the optical fiber 9a has the structure comprising the core 91, the clad 92, and the covering 90, and is provided with a multiplex spectral-line transmission part 93, a single spectral-line introduction part 94, and a spectral-line superimposition part 95 in an axial direction.

Themultiplex spectral-line transmission part 93 is a light transmission path that transmits multiplex spectral lines in which the spectral lines of each wavelength outputted from the optical transmitter 12 of each node 7 on the circles 3 are superimposed, and occupies the greater part of the optical fiber 9a which constitutes the looped circle 3. As for the multiplex spectral-line transmission part 93, the diameter D1 of the core 91 is set to 62.5 µm and the diameter D2 of the clad 92 is set to 125 µm. The multiplex spectral-line transmission part 93 is bonded with the spectral-line superimposition part 95 by adhesion in a connection part 96, which will be described later. Moreover, an optical receiver 13 is connected to the side of the multiplex spectral-line transmission part 93.

The single spectral-line introduction part 94 is connected to a signal light outgoing portion 12a of the optical transmitter 12 at an upstream end portion with respect to a transmission direction of the optical signals, and joined to the connection part 96 by adhesion at a downstream end portion, and is a light transmission path that leads spectral lines of a single wavelength outputted from the optical transmitter 12 to the spectral-line superimposition part 95. As for the single spectral-line introduction part 94 as is the case with the multiplex spectral-line transmission part 93, the diameter D3 of the core 91 is set to 62.5 µm and the diameter D4 of the clad 92 is set to 125 µm. Here, in this specification, the terms of the spectral lines of a single wavelength and the single spectral lines are used with a meaning of spectral lines in a continuous single wavelength range, and each spectral line is distinguished by each center wavelength. Therefore, seven wavelengths means that the number of wavelength ranges is seven, and a plurality of spectral lines means spectral lines from which wavelength ranges are different.

The spectral-line superimposition part 95 is provided with the connection part 96 combined with the multiplex spectral-line transmission part 93 and the single spectral-line introduction part 94 at the upstream end portion thereof with respect to the transmission direction of the optical signals, and is an light transmission path where the multiplex spectral lines transmitted by the multiplex spectral-line transmission part 93 and the spectral lines of the single wavelength transmitted by the single spectral-line introduction part 94 are transmitted while being superimposed.

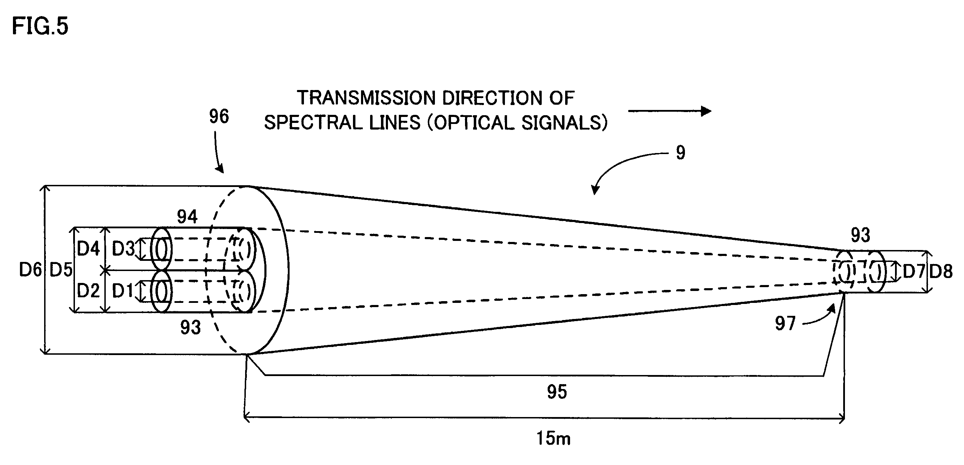

In the spectral-line superimposition part 95 as shown in FIG. 5, the diameters of the core 91 and the clad 92 become the greatest at the connection part 96, gradually become smaller toward the downstream direction, and become the same thickness as the multiplex spectral-line transmission part 93 at the downstream end portion 97 15 m downstream from the connection part 96. The reason that the optical fiber is structured so that the diameter is gradually decreased in this way is because a structure that the diameter is sharply decreased may cause attenuation of light to be transmitted.

More specifically, the diameter D5 of the core 91 at the connection part 96 is 250 µm and the diameter D6 of the clad 92 is 500 µm. Namely, the diameter D5 of the core 91 at the most upstream part of the spectral-line superimposition part 95 is greater than any of the diameter D3 of the core 91 of the single spectral-line introduction part 94 and the diameter D1 of the core 91 of the multiplex spectral-line transmission part 93, and is furthermore greater than the sum of them. As shown in FIG. 5, the diameter of the core is decreased at a rate of 12.5 µm as it proceeds 1 m toward the downstream direction, and at the downstream end portion 97, which is 15 m downstream from the connection part 96, the diameter D7 of the core 91 is 62.5 µm as equal as the diameter D1, the diameter D8 of the clad 92 is 125 µm as equal as the diameter D2, and the multiplex spectral-line transmission part 93 is followed.

As shown in FIG. 4, the multiplex spectral-line transmission part 93 and the single spectral-line introduction part 94 are disposed substantially parallel to the transmission direction of the spectral lines at the spectral-line superimposition part 95, and are combined with the core 91 of the spectral-line superimposition part 95 having the diameter D5, which is equal to the sum of the diameter D2 of the clad of the multiplex spectral-line transmission part 93 and the diameter D4 of the clad of the single spectral-line introduction part 94 at the connection part 96. Therefore, since it is structured so that the multiplex spectral line and the single spectral line are incident substantially straightly along the transmission direction of the spectral lines into the core 91 of the spectral-line superimposition part 95, both spectral lines are superimposed uniformly, so that a multiplex spectral line free of deviation in light intensity for every wavelength can be generated.

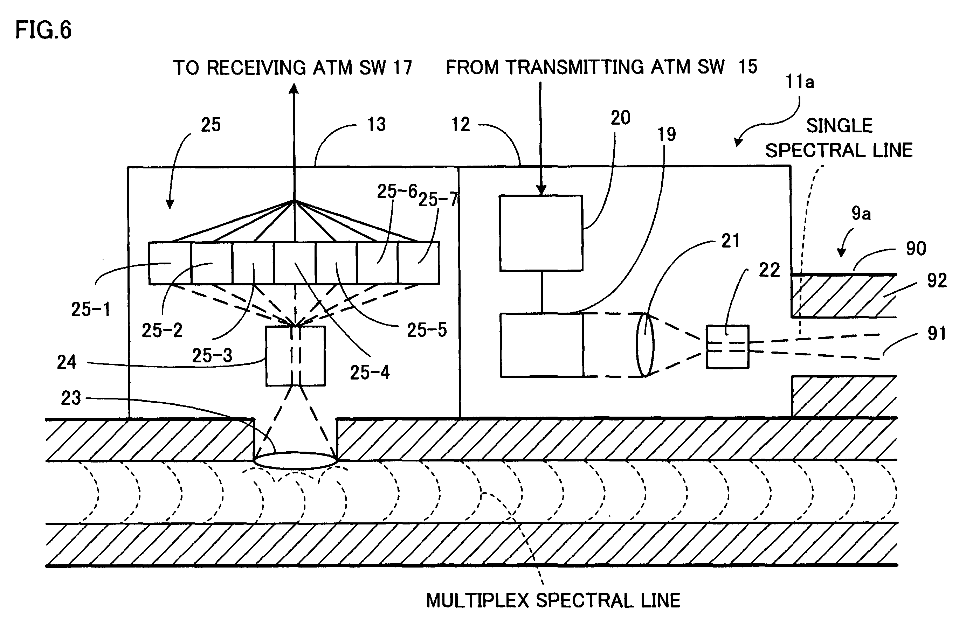

Next, detailed structures of the optical transmitter 12 and the optical receiver 13, which constitutes transceiver unit 11a, will be described with reference to FIG. 6.

The optical transmitter 12 comprises a light emitting diode (hereinafter referred to as LED) 19, an LED driving circuit 20, a convex lens 21, and a spectroscope 22, and is connected to the upstream end portion of the single spectral-line introduction part 94 of optical fiber 9a in the optical signal transmission direction.

The LED 19 is a light source that emits natural light, and can be switched between ON and OFF by electrical signals. That is, when the transmitting ATM switch 15 transmits the electrical signal as transmission information to the optical transmitter 12, the LED driving circuit 20 supplies ON or OFF electrical signal to the LED 19 based on transmission information. For example, when a bit for the transmission information is "1", an ON signal is generated, andwhen"0", an OFF signal is generated. Thus, the intensity of the natural light emitted from the LED 19 is modulated based on transmission information, thereby optical pulses as optical signals are generated. In addition, in this specification, an incoherent light is referred to as the natural light irrespective of what the light source is.

The convex lens 21 is an optical member that condenses natural light emitted by the LED 19 and leads the light to the spectroscope 22. The spectroscope 22 is a device that separates and outputs a spectral line of a predetermined wavelength, when the natural light is inputted. In the optical transmitter 12, since the optical pulses by the natural light emitted from the LED 19 and condensed by the convex lens 21 are inputted into the spectroscope 22, the spectroscope 22 outputs signal lights of the spectral line of the predetermined wavelength. In addition, the center wavelength of the spectral line that the spectroscope 22 separates is predetermined for every node 7, and it is set such that a spectral line of either of center wavelengths λ₁ to λ₇ may be separated. Here, the center wavelength and the wavelength range (inside of a parenthesis) of each spectral line is as follows: λ₁ = 400 (±10) nm (violet), λ₂ = 450 (±10) nm (blue), λ₃ = 525 (±10) nm (green), λ₄ = 550 (±10) nm (yellowish green), λ₅ = 600 (±10) nm (yellow), λ₆ = 650 (±10) nm (orange) and λ₇ = 700 (±10) nm (red).

The optical receiver 13 comprises a light receiving part 23, the spectroscope 24, and a photodiode 25, and is connected to a side of the multiplex spectral-line transmission part 93 of the optical fiber 9a.

The light receiving part 23 is projected in a direction substantially perpendicular to the axial direction of the optical fiber 9a, inserted into the clad 92 of the optical fiber 9a, and is provided with a convex lens 23a in the vicinity of a boundary between the core 91 and the clad 92 so as to face the side of the core 91.

The convex lens 23a is an optical member that receives multiplex spectral lines transmitted in the core 91 of optical fiber 9a and condenses the multiplex spectral lines. The convex lens 23a is disposed substantially parallel to the side of the core 91 like a window facing onto the inside of the core 91 from the side. That is, the convex lens 23a is disposed such as to receive multiplex spectral lines from the side with respect to the transmission direction of the multiplex spectral lines.

In addition, the reason that light receiving is possible at the side of the transmission direction of the multiplex spectral line in this way is because the spectral line is light having a property that goes straight on while spreading in the optical fiber 9. Therefore, in the optical communication system using light that does not spread like a laser beam by a semiconductor laser device, since it is necessary to receive and take in all beams of light in the light transmission path, it is impossible to receive light from the side of the light transmission path like this embodiment.

The spectroscope 24 is a device that separates the inputted light into the seven spectral lines whose wavelengths are different. That is, the multiplex spectral line transmitted in the core 91 of the optical fiber 9a is condensed by the convex lens 23a, inputted into the spectroscope 24, and seven spectral lines with the center wavelengths λ₁ to λ₇ are outputted.

The photodiode 25 is a device that converts optical pulses as inputted optical signals into electrical signals, and comprises seven photodiodes 25a to 25g to detect optical pulses independently from which every one of the seven spectral lines outputted from the spectroscope 24 is inputted. The spectral lines of the center wavelengths λ₁ to λ₇ are inputted to the photodiodes 25a to 25g respectively, which detect optical pulses, change them into electrical signals and output the signals to the receiving ATM switch 17.

Since optical signals are decreased in proportion to a distance where it is transmitted in the optical fiber, the intensity of the optical signals that the optical receiver 13 of each node 7 receives is stronger as the distance of the node 7 that transmits the optical signal is shorter, and the intensity of the optical signals is weaker as the distance is farer. Therefore, the intensity of the optical signals of light received by a certain node 7 is determined for every node 7 that has transmitted the optical signals. Then, by mapping receiving the intensity of the received light for every node 7 beforehand and setting up light-receiving sensitivity, the optical receiver 13 is structured such as to prevent incorrect detection of optical signals.

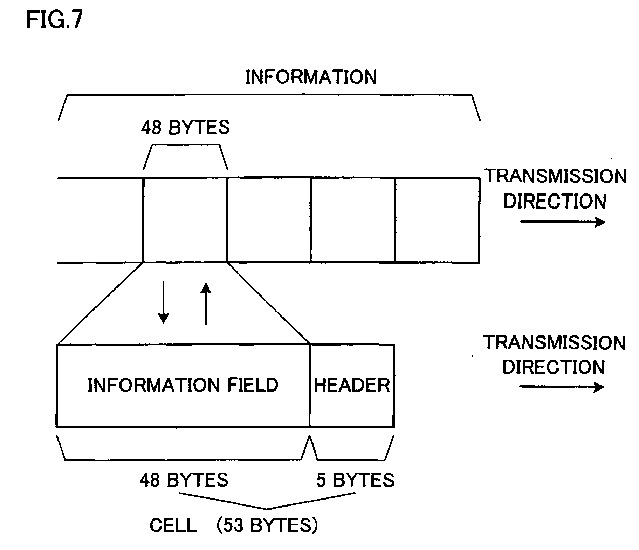

Next, the functions of the cell generation processing part 14 and the cell termination processing part 16 will be described with reference to FIG. 7.

The cell generation processing part 14 is a unit that performs processing to generate a cell by dividing continuous information transmitted from a terminal 10 into 48-byte blocks (information fields) and adding a header including a destination address of the information concerned (processing indicated by a downward arrow in FIG. 7) , writes the cell in an internal memory, reads it out at a speed over twice the speed in writing within a predetermined time, and sends it out. When information is inputted into the cell generation processing part 14 from the terminal unit 10, a cell is generated, and transmitted to the transmitting ATM switch 15 with a frame synchronization signal representing a bit rate added to its forefront. In addition, a cell of a total of 53 bytes comprising an information field of 48 bytes of and a header of 5 bytes makes a unit of information transmitted in the optical communication network 1, and the cell is transmitted in the form of optical signals within the optical fiber 9.

On the other hand, the cell termination processing part 16 is a unit that performs processing (processing indicated by an upward arrow in FIG. 7) where it stores each cell received from the receiving ATM switch 17 in the internal memory, takes out information of 48 bytes each, converts compressed burst signals into original signals size which can be received at the terminal unit 10, and transmits the signals to the terminal unit 10. Moreover, when a synchronizing signal is received from the receiving ATM switch 17, the synchronizing signal is provided to the terminal unit 10.

Next, the structures of the transmitting ATM switch 15 and the receiving ATM switch 17 will be described.

The transmitting ATM switch 15 is an electronic circuit that transmits a cell, which is generated by the cell generation processing part 14 after information is transmitted from the terminal unit 10, to either one of the transceiver units 11a, 11b, and is connected to the optical transmitter 12 of the transceiver unit 11a, the optical transmitter 12 of the transceiver unit 11b, and the terminal unit 10. That is, the destination address included in the header of the cell is decoded, either of the optical fibers 9a and 9b is chosen, and the cell is transmitted to the transceiver unit 11a or 11b. In addition, it is desirable to be structured such that either of the optical fibers 9a and 9b may be chosen in order that the transmission path of optical signals may become the shortest.

More specifically, the transmitting ATM switch 15 comprises unit switches with two inputs and two outputs in cascade connection, having the same structure as a known ATM switch. It is structured such that, when a predetermined address is inputted, the transceiver unit 11a to which the optical fiber 9a is connected is chosen, and when other predetermined addresses different from the aforementioned predetermined address is inputted, the transceiver unit 11b to which the optical fiber 9b is connected is chosen.

For example, it can be structured such that, when a first bit of the destination address included in the header of the cell is 0, the transceiver unit 11a connected to the optical fiber 9a may be chosen, and when the first bit of the destination address is 1, the transceiver unit 11b connected to the optical fiber 9b may be chosen.

On the other hand, the receiving ATM switch 17, to which cells received by the transceiver unit 11b from the optical fiber 9b are inputted as receiving information, is a switch that transmits only a cell to a node of itself to the terminal 10, from cells that the transceiver unit 11a receives from the optical fiber 9a, and is connected to the transceiver unit 11a connected to the optical fiber 9a, the transceiver unit 11b connected to the optical fiber 9b, and the terminal unit 10. Furthermore, when the receiving ATM switch 17 receives a header including a synchronizing signal from the transceiver 11a, it sends out the synchronizing signal to the cell generation processing part 14 and the cell termination processing part 16, respectively. Therefore, the cell generation processing part 14 and the cell termination processing part 16 operate taking synchronization based on the synchronizing signal provided by this receiving ATM switch 17.

More specifically, the receiving ATM switch 17 comprises unit switches with two inputs and two outputs in cascade connection, as is the case with the transmitting ATM switch 15. It is structured such as to send cells to the terminal unit 10 only when a destination address included in a header of a cell is to a self-node.

The slave oscillator 41 is a crystal oscillator that supplies the synchronizing signals to each part in the nodes 7 based on the synchronizing signals supplied by the slave oscillator 40 in the coupling device 82 that is a more upper oscillator.

More specifically, when the slave oscillator 41 receives the synchronizing signal, which is sent from the slave oscillator 40 in the coupling device 82 via the optical fibers 9a, 9b of the circle 3, from the optical transceiver unit 11a or 11b, it transmits the synchronizing signal to the internal memory of the cell termination processing part 16. The internal memory transmits the synchronizing signal to the slave oscillator 41. The slave oscillator 41 supplies the synchronizing signal to the receiving ATM switch 17, the transmitting ATM switch 15, the cell generation processing part 14, the cell termination processing part 16, and the terminal unit 10 based on the supplied synchronizing signal. Therefore, each part in these nodes 7 takes synchronization, and operates based on the synchronizing signal supplied from slave oscillator 41.

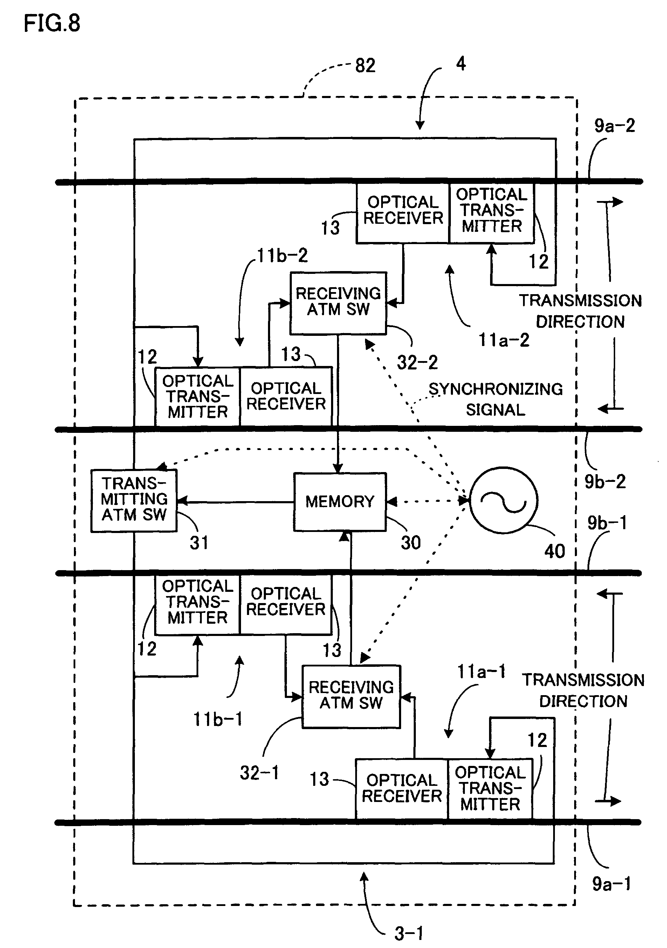

Next, a structure of a coupling device 82 will be described with reference to FIG. 8 by taking a coupling device 82 that connects the circle 3-1 and the middle distance connection line 4, as an example. In addition, since the coupling devices 8 and 81 have also the same structure, the detailed description about these is omitted.

The coupling device 82 comprises transceiver units 11a-1, 11b-1, and a receiving ATM switch 32-1, which are provided on optical fibers 9a-1, 9b-1 on the circle 3-1 side, transceiver units 11a-2, 11b-2 and a receiving ATM switch 32-2, which are provided on optical fibers 9a-2, 9b-2 on the middle distance connection line 4, a transmitting ATM switch 32-2, a memory 30 with a capacity of 2 megabytes, and the slave oscillator 40.

The memory 30 comprises a memory capable of inputting and outputting data at a high speed such as VC SDRAM (virtual channel SDRAM).

The transceiver units 11a-1, 11b-1, 11a-2, 11b-2 have the same structure as the transceiver unit 11a of the node 7 described above.

The receiving ATM switch 32-1 is connected to the optical receiver 13 of the transceiver unit 11a, the optical receiver 13 of the transceiver unit 11b, and the memory 30. The receiving ATM switch 32-1 is structured such as to write contents of a cell into the memory 30 only when the cell received by the two optical receivers 13 is inputted and the destination address included in the header is the predetermined address. In addition, since the memory 30 is shared by the connected circle 3-1 and the middle distance connection line 4, and is structured such that it is accessible from both sides, exchange of cells between both lines can be processed coaxially at a high speed.

More specifically, the receiving ATM switch 32-1 comprises unit switches with two inputs and two outputs in cascade connection, as is the case with the receiving ATM switch 17.

For example, the receiving ATM switch 32-1 is structured such that contents of a cell is written into the memory 30 only when the destination address of the cell received at the circle 3-1 is the address on a circle except for the circle 3-1, the adjacent circles 3-2 and 3-4. In addition, it is based on the following reasons why these three circles are excluded. That is, when the destination address is an address in the circle 3-1, information reaches to the destination node through no coupling devices. In addition, it is because a transmission path via the coupling device 8 connected respectively is shorter than a transmission path via the coupling device 82 when the destination address is the circle 3-2 or 3-4.

The transmitting ATM switch 31 is connected to the memory 30, the optical transmitter 12 of the transceiver unit 11a, the optical transmitter 12 of the transceiver unit 11b, optical transmitter 12 of the transceiver unit 11c, and optical transmitter 12 of the transceiver unit 11d. And, the transmitting ATM switch 31, to which cells stored in the memory 30 are sequentially inputted, is structured such as to transmit a cell to an optical transmitter 12 selected by a predetermined address area to which a destination address included in a header of the cell belongs.

More specifically, the transmitting ATM switch 31 comprises unit switches with two inputs and two outputs in cascade connection, as is the case with the receiving ATM switch 17-1 described above. For example, the transmitting ATM switch 31 is structured such that addresses are divided into four areas and each area is associated with the optical fibers 9a-1, 9b-1, 9a-2, and 9b-2, respectively.

The slave oscillator 40 is a crystal oscillator that supplies synchronizing signals to each part in the coupling device 82 based on the synchronizing signals supplied from the slave oscillator in the coupling device 81 that is a more upper oscillator.

More specifically, when the receiving ATM switch 32-2 receives from the optical transceiver unit 11a-2 or 11b-2, the synchronizing signals, which are transmitted from the slave oscillator in the coupling device 81 via the optical fiber 9a-2 or 9b-2 of the middle distance connection line 4, it transmits the synchronizing signal to the memory 30. The memory 30 transmits the synchronizing signals to the slave oscillator 40. The slave oscillator 40 supplies the synchronizing signals to the receiving ATM switches 32-1, 32-2, the transmitting ATM switch 31, and the memory 30 based on the supplied synchronizing signals. Thus, each part in these coupling devices 82 is actuated synchronously based on the synchronization signals supplied by the slave oscillator 40.

Next, amultiple access method in the optical communication network 1 will be described.

In the optical communication network 1, transmission of information is conducted by means of a cell synchronous multiplex and time division multiple access method. The following describes in detail.

A cell outputted from the transmitter 12 of each node 7 on the circles 3 is synchronized by the synchronizing signal supplied from the slave oscillator 40 of the coupling device 82 provided on each circle 3, time multiplexed, and then transmitted.

That is, as described above, the master oscillator 40 transmits the optical signals as the synchronizing signal to the inside of the optical fiber 9 comprising the long distance connection line 5. When the coupling device 81 connected to the long distance connection line 5 receives the optical signals as the synchronizing signal, it causes the slave oscillator 40 provided inside to generate synchronizing signals based on the received synchronizing signals, and transmits the synchronizing signals to inside of the optical fiber 9 of the middle distance connection line 4 as the optical signals. Similarly, the coupling device 82 connected to the middle distance connection line 4 transmits the optical signals as the synchronizing signal to the inside of the optical fiber 9.

The optical signals as the synchronizing signals transmitted to the inside of the optical fiber 9 in the circle 3 are received by each node 7 and the optical receiver 13 of the coupling device 8 while those go around the optical fiber 9, and the synchronizing signals are supplied from the ATM switch 17 to each part in the nodes 7 as described above. Thus, transmission and reception of the optical signals are performed by the transceiver unit 11c based on these synchronizing signals. Here, as there is no lens or the like which may cause attenuation of the optical signals in the core 91 of the optical fiber 9 comprising the circle 3, the synchronizing signals can be transmitted to all the nodes 7 on the circle 3, onlyby transmitting the optical signals as the synchronizing signals to the optical fiber 9, without performing conversion to electrical signals. Thus, whole of the circles 3 can be easily synchronized, and furthermore, whole of the optical communication network 1 including the middle distance connection line 4 and the long distance connection line 5 can be synchronized.

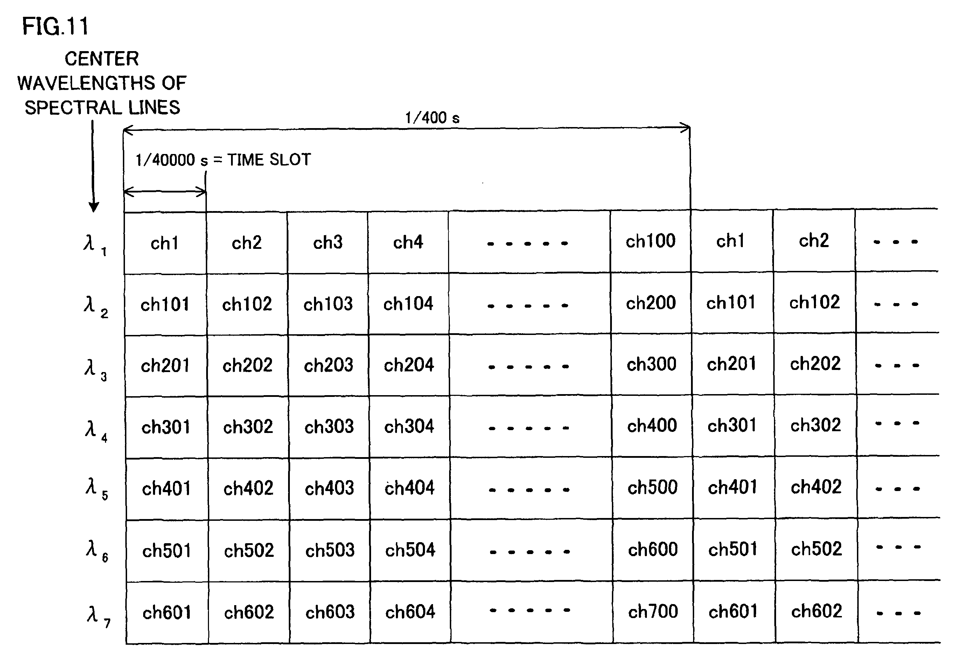

The optical signals outputted from the optical transmitter 12 of each node 7 are transmitted by means of time division multiple access (TDMA) method in units of cells based on the synchronizing signals. More specifically, as shown in FIG. 11, a TDMA frame of a four-hundredth of a second is time-divided by 100 terminals and used for every spectral line of each wavelength λ₁ to λ₇. Thus, each cell is multiplexed synchronously by a time slot of a four-millionth of a second and transmitted. In other words, the 100 terminals perform transmission400 times per second. Thus, when the transmission rate of the optical signals is 64 Mbps (a valid signal is its one-half) , the transmission capacity per second is 64M ÷ 2 × 400 (times) × 2 (the number of optical fibers) = 25.6 gigabits.

For example, 100 nodes 7 to which wavelength λ₁ is allotted transmit respectively cells within each predetermined time slot of either of ch1 to ch100. Similarly, 100 nodes 7 each to which wavelengths λ₂ to λ₇ are allotted respectively transmit cells within a time slot of any one of ch101 to ch200, ch201 to ch300, ch301 to ch400, ch401 to ch500, ch401 to ch500, ch501 to ch600, and ch601 to ch700.

In this way, in the optical communication network 1, the spectral lines of 7 wavelengths are used, each wavelength is time-division multiplexed into 100 time slots, thereby producing a total of 700 virtual channels from ch1 to ch700.

On the other hand, the optical receiver 13 receives the multiplex spectral lines every slot time of a four-millionth of a second, and separate them into spectral lines of 7 wavelengths, thereby receiving seven cells in parallel. For example, in the first time slot shown in FIG. 11, seven cells of ch1, ch101, ch201, ch301, ch401, ch501, ch601, and ch701 are received every time slot of a four-millionth of a second.

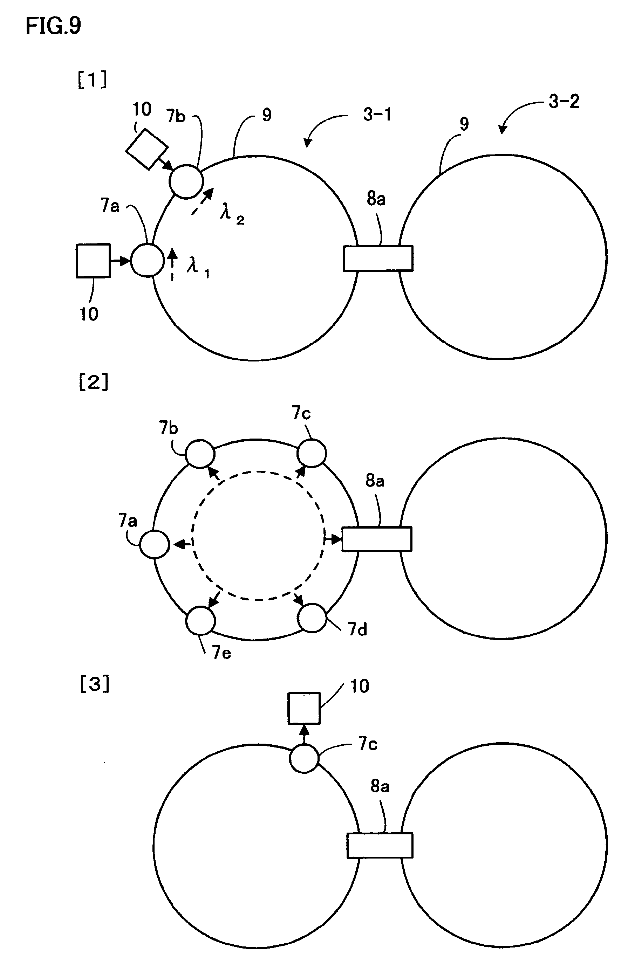

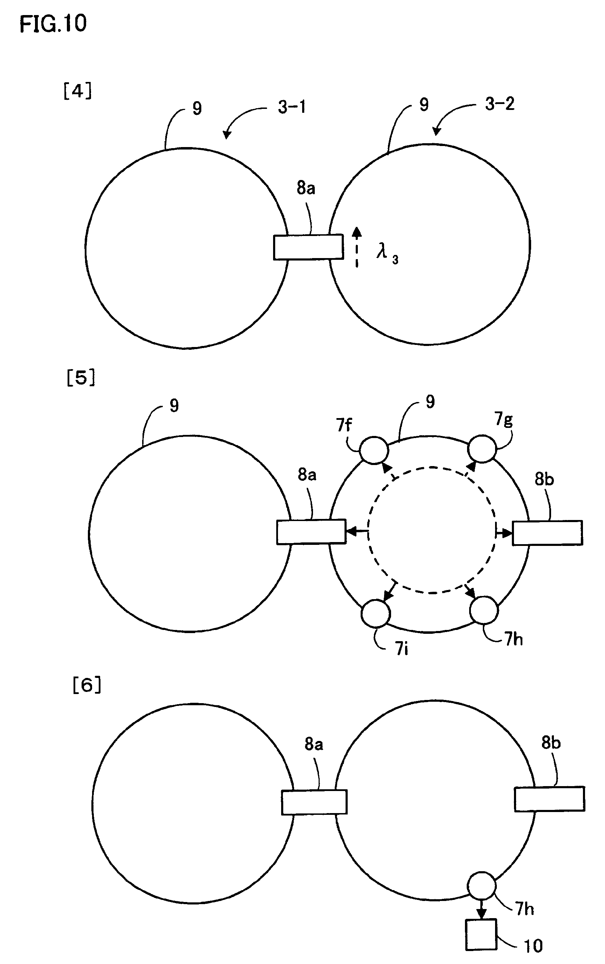

Next, an outline of information flow and operations of each member in the optical communication network 1 will be described with reference to FIGS. 9 and 10.

### [1] (Refer to FIG. 9)

First, transmission information is created on the terminal 10 connected to the node 7a on the circle 3-1, an address of other node 7 is specified as a destination and transmitted, so that information is transmitted to the connected node 7a in a form of electrical signals.

The cell generation processing part 14 divides the received information into 48-byte information fields, generates cell A by adding a 5-byte header including a destination address, and inputs the cell A to the transmitting ATM switch 15.

The transmitting ATM switch 15 selects the optical fiber 9a or 9b based on the destination address included in the header of the cell A, and transmits the cell to the optical transmitter 12 of the transceiver unit 11a or 11b. (Here, it is assumed that the optical fiber 9a whose transmission direction of the optical signal is clockwise is selected.)

The optical transmitter 12 converts the contents of the cell A into optical signals, and sends the optical signals to the inside of the single spectral-line introduction part 94 of the optical fiber 9a. Here, for example, when a channel of ch3 is allotted to the node 7a, the spectroscope 22 separates the spectral line of wavelength λ₁, the optical signals by the spectral line of wavelength λ₁ representing the contents of the cell A are sent to the inside of the time slot of ch3 based on the synchronizing signals (refer to FIG. 11).

Similarly, when information is transmitted from the terminal 10 connected to the node 7b to which a time slot of ch105 is allotted, the optical signals by the spectral line of wavelength λ₂ representing the contents of a cell B are sent to the inside of the time slot of ch105 based on the synchronizing signals (refer to FIG. 11).

### [2] (Refer to FIG. 9.)

The optical signals transmitted from the optical transmitter 12 are transmitted from the single spectral-line introduction part 94 of the optical fiber 9b to the spectral-line superimposition part 95, and are superimposed with the multiplex spectral line transmitted from the multiplex spectral-line transmission part 93, and go round the inside of the optical fiber 9b of the circle 3-1. That is, the spectral line of wavelength λ₁ and the spectral line of wavelength λ₂ transmitted from the nodes 7a and 7b respectively are transmitted from the single spectral-line introduction part 94 to the inside of the optical fiber, superimposed with the multiplex spectral line transmitted from the multiplex spectral-line transmission part 93 within the spectral-line superimposition part 95, and transmitted as a newmultiplex spectral line within the multiplex spectral-line transmission part 93.

All nodes 7 and coupling devices 8 on the circle 3-1 receive the multiplex spectral line at the optical receiver 13 respectively, and convert the multiplex spectral line to electrical signals, and input the electrical signals to each receiving ATM switch 17. In addition, although the optical signals actually continue to go round the inside of the optical fiber 9a until the optical signals completely attenuate and light intensity reaches 0, the light intensity after attenuation by one round on the circle 3-1 sets the sensitivity of the photodiode 25 so as not to be detected by the optical receiver 13, so that as valid signals, the optical signals are transmitted only one round of the circle.

More specifically, each node 7 receives the multiplex spectral lines transmitted through the optical fiber 9a at the convex lens 23a of the optical receiver 13. In addition, although the convex lens 23a is provided at a side of the core 91 that does not obstruct transmission of signal light, the multiplex spectral lines go straight while expanding within the core 91, and are reliably incident into the convex lens 23a. The received spectral lines are separated into spectral lines of wavelengths λ₁ to λ₇ by the spectroscope 24, and then the optical signals are received at the photodiode 25 for every spectral line, and inputted to each receiving ATM switch 17.

### [3] (Refer to FIG. 9)

The receiving ATM switch 17 of each node 7 transmits the contents of a cell as electrical signals to its own terminal 10 only when the destination address included in the header of the cell represented by the inputted optical signals is the address of its own node 7. For example, when the destination address of the cell A is the node 7c of the circle 3-1, only the receiving ATM switch 17 of the node 7c transmits the cell A to the terminal 10, and communication processing is completed.

### [4] (Refer to FIG. 10.)

On the other hand, when the destination address included in the header of an inputted cell is an address on a specified circle 3 other than the circle 3-1 (for example, circle 3-2), the receiving ATM switch 32-1 of the coupling device 8 receiving the optical signal in [2] writes the contents of the cell into the memory 30. And, the transmitting ATM switch 31 reads the header of the cell stored in the memory 30 and transmits the contents of the cell to the optical transmitter 12 of any of a pair of the optical fibers 9a, 9b connected to the coupling node 8 in accordance with a predetermined address area. (Here, it is assumed that the optical fiber 9a is selected.)

The optical transmitter 12 converts the contents of the cell into optical signals and transmits the optical signals to the inside of the optical fiber 9a using a predetermined channel.

For example, when the destination address of the cell B is an address on the circle 3-2 and ch202 is allotted to the coupling device 8a, the optical signals representing the contents of the cell B by the spectral line of wavelength λ₃ are transmitted to the inside of the optical fiber 9a of the circle 3-2 by the coupling device 8a.

### [5] (Refer to FIG. 10.)

As is the case with [2] , while the optical signals go round through the looped optical fiber 9a, all nodes 7 and the coupling device 8 on the circle 3-2 receive the optical signals at each optical receiver 13, converts the optical signals into electrical signals and inputs the electrical signals to each receiving ATM switch 17.

### [6] (Refer to FIG. 10.)

As is the case with [3], only when the destination address included in the header of a cell represented by inputted optical signals is an address of a self-node 7, the receiving ATM switch 17 of each node 7 on the circle 3-2 transmits the contents of the cell as the electrical signals to the self-terminal 10. For example, when the destination address of the cell B is the node 7h on the circle 3-2, only the receiving ATM switch 17 of the node 7h transmits the cell B to the terminal 10 and communication processing is completed.

Hereinafter, when the destination node does not exist in the same circle 3-1, processing [4] and [5] is repeated, and after reaching the circle 3 where the destination node exists, communication processing is completed by processing [6].

Thus, information transmitted from the terminal 10 of the transmission source is transmitted to the destination terminal 10 in a form of a cell via one or two or more circles 3, the middle distance connection line 4, or the long distance connection line 5.

In addition, in the above embodiment, the optical transmitter 12 corresponds to a transmission side, the optical receiver 13 corresponds to a reception side, the optical communication network 1 and the circles 3 correspond to an optical communication system, the optical fiber 9 corresponds to a light transmission path, the single spectral-line introduction part 94 corresponds to a first light transmission path, the multiplex spectral-line transmission part 93 corresponds to a second light transmission path, the spectral-line superimposition part 95 corresponds to a third light transmission path, the LED 19 corresponds to a light source, the LED driving circuit 20 corresponds to a modifying device, the spectroscope 22 corresponds to an extracting device, the spectroscope 24 corresponds to a separating device, and the photodiode 25 corresponds to a detecting device.

As is apparent from the above detailed description, in the optical communication network 1 of this embodiment, as it is a method where spectral lines in which natural light emitted by the LED 19 is separated according to each wavelength are superimposed and transmitted, a further great deal of information can be transmitted when compared with a method where light of a single wavelength only is transmitted to the inside of the optical fiber.

In addition, in the optical communication network 1 of this embodiment, as the circles 3, the middle distance connection line 4 and the long distance connection line 5 are structured such as to carry out a light exchange function, it is possible to build an optical communication network extremely simply and inexpensively without having to provide grand-scale exchangers, routers, hubs or the like.

In addition, in the optical communication network 1, as a transmission speed is determined depending on how much of data capacity each node 7 transmits within a time slot, it is possible to improve the transmission speed as a network without any limitations by improving an access speed or capacity of semiconductor components such as memory comprising individual nodes 7 and coupling devices 8.

In addition, when each node 7 receives the optical signal, it reads not whole of cells but the header portion only and decodes whether it is for self-node or not, so that processing can be done at a high speed.

In addition, as it is a method where spectral lines in which natural light emitted by the LED 19 is separated according to each wavelength are superimposed and transmitted, a further great deal of information can be transmitted when compared with a method where light of a single wavelength only is transmitted to the inside of the optical fiber.

In addition, as it is a method where easy-to-be-separated spectral lines are superimposed and transmitted, unlike the wavelength division multiplex method using semiconductor laser, the optical transmitter 12 and the optical receiver 13 can be constituted simply and inexpensively using the inexpensive spectroscope 22 or 24. Furthermore, nodes 7 including these devices can be made small-sized and inexpensive devices as the same as a cellular phone.

In addition, a multiplex spectral line, where spectral lines of a single wavelength separated from natural light are superimposed, goes straight while expanding within the core 91 of the optical fiber 9, the light receiving part 23 at the optical receiver 13 can be provided at a side of the core 91, which is a light transmission path. Thus, light can be received without obstructing light transmission, attenuation of light transmitted through the optical fiber can be controlled extremely low, when compared with a structure where a physical barrier such as a lens which is a cause of attenuation of light is provided in the light transmission path like an optical communication system using conventional semiconductor lasers. Thus, when the optical signals are transmitted using the optical fiber over a long distance, installation places of relay devices for amplifying signals can be reduced drastically more than conventional ones.

Furthermore, only by transmitting the optical signals as the synchronizing signal in the optical fiber, synchronization in the circle can be done without conversion to electrical signals, and further, synchronization of the entire optical communication network can be done simply and reliably.

In addition, as the light receiving part 23 of the transceiver unit is provided with the convex lens 23a to condense light, it is possible to improve the light reception sensitivity.

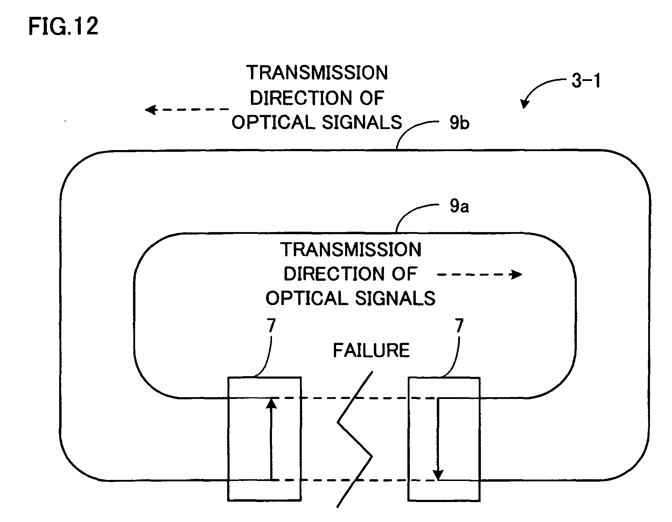

In addition, as each circle 3 forms double rings by two optical fibers, when trouble occurs at a place of the optical fibers as shown in FIG. 12, for example, the optical communication network 1 can continue communication by separating the trouble place by bypassing by nodes 7 sandwiching both sides of the trouble place based on self diagnosis programs built in the nodes 7 and by folding back, so that extremely high reliability can be maintained. Of course, even when a construction work to establish a new node 7 on a circle is made, the construction work can be made without stopping communication service by adopting the same method as the above.

In addition, as the optical signals can be transmitted by selecting, of the two optical fibers comprising circles, an optical fiber where a path to a destination node is shorter is, communication can be further speeded up.

In addition, as each of the spectral line whose wavelengths are different are time-divided and multiple accessed, communications can be done by connecting a lot of nodes on a circle. In addition, in the above embodiment, as a circle is set in a small-scale unit of about 2 km in periphery using an optical fiber whose length is 15 km and the number of nodes is limited to 100 per wavelength, there is an advantage that time division processing can be easy to execute.

In addition, this invention is not limited to the above embodiment, and various changes can be made without departing from the scope of the invention.

For example, the LED is used as a light source in the above embodiment, however, a white light source such as a lamp that emits natural light and a light-emitting device of every kind such as a SLD (super luminescent diode) may be used. Namely, any light source may be available as long as it is a light source that emits natural light and enables on-off control by a semiconductor switching or the like.

In addition, in the above embodiment, it is structured that communication are made using the seven spectral lines of visible light, however, for example, it may be structured such as to use spectral lines of non visible light, such as infrared radiation. Namely, any spectral line may be used as long as it is light having nature that goes straight while expanding.

In addition, the spectral lines to be separated may be more than and of course less than seven wavelengths.

In addition, in the above embodiment, the optical communication network 1 comprises a network of three levels of the circles 3, the middle distance connection line 4, and the long distance connection line 5, however, the optical communication network 1 may be made up of the circles 3 alone, or the circles 3 and the middle distance connection line 4, or may be provided with a connection line of a higher level of the long distance connection line 5. In addition, in FIG. 2, the number of circles to be connected to one middle distance connection line 4 is four, however, it may be less or more than that. In addition, the number of circles to be connected to the middle distance connection line 4 is preferably about 695.

In addition, the number of nodes (including coupling devices) to be connected to the circles is not limited to 700, and may be less or more than that.

In addition, the length of an optical fiber comprising the circles 3 is not limited to 15 km, and of course, may be longer or shorter than that. Namely, what is necessary is just to set the light intensity of the light source corresponding to the length of the optical fiber.

In addition, the length of the spectral-line superimposition part 95 of the optical fiber 9 is 15 m, however, it is not limited to this length. In addition, the ratio that the core diameter reduces is 12.5 µm to a length of 1 m of the transmission direction, however, it is not limited to this length. Namely, any structure is available as long as the core diameter can be gradually reduced, and a ratio lower than 12.5 µm is preferable.

In addition, in the above embodiment, the circles are double rings by the two optical fibers 9a, 9b, however, can be formed of a single ring using one optical fiber. In this case, as the transmission direction of the optical signal is one way, the transmitting ATM switch 15 may be omitted from the nodes 7.

In addition, in the above embodiment, the transmitting ATM switch 15 or the like comprises a known ATM switch as a device that reads headers and transmits signals, however, any electronic circuit may be available as long as it has an equivalent function that processes cell signals.

In addition, in the above embodiment, an example that implements the optical communication method of the invention in the optical communication network constituted by looped optical fibers is shown, however, the optical communication method of the invention can be implemented in any network configuration such as a star network as long as communication is made between the transmission side and the reception side via light transmission path such as an optical fiber. In addition, it can be applied to optical communication in aircrafts and automobiles.

In addition, in the above embodiment, an example where information is transmitted in a formof a cell comprising a 48-byte information field and a 5-byte header is shown, however, it is not limited to this, and any logic structure of information to be transmitted may be adoptable as long as information is converted into optical signals and transmitted.

## Claims

1. An optical communication method for communicating between a transmission side and a reception side via a light transmission path capable of transmitting optical signals, comprising the steps of:
on the transmission side, generating optical signals by modulating intensities of a plurality of spectral lines whose wavelengths are different individually from each other, and transmitting the plurality of spectral lines through a same light transmission path;
transmitting a multiplex spectral line where the plurality of spectral lines are superimposed through the light transmission path; and
on the reception side, receiving the multiplex spectral line transmitted through the light transmission path, separating the multiplex spectral line into a plurality of spectral lines whose wavelengths are different, and detecting optical signals for each of the separated spectral lines.

2. The optical communication method of claim 1, where on the reception side, the multiplex spectral line is received at a side of the light transmission path.

3. The optical communication method of claim 1 or 2, where on the transmission side, natural light is generated by a light source, and a spectral line of a specified wavelength extracted from the natural light is used.

4. An optical communication system for carrying out communications between a plurality of optical transmitters and one or more optical receivers via a light transmission path capable of transmitting optical signals, comprising:
each of the optical transmitters comprising:
a light source that emits natural light;
a modulating device that modulates intensity of the natural light emitted by the light source based on transmission information; and
an extracting device that extracts a spectral line of a specified wavelength from the natural light;
wherein each of the optical transmitters is structured such as to transmit optical signals by the spectral line of the specified wavelength modulated by the modulating device and extracted by the extracting device through the light transmission path;
the light transmission path being structured such as to transmit a multiplex spectral line in which a plurality of spectral lines transmitted from the plurality of optical transmitters are superimposed;
the optical receiver comprising:
a light receiving part that receives the multiplex spectral line transmitted through the light transmission path;
a separating device that separates the multiplex spectral line received by the light receiving part into a plurality of spectral lines whose wavelengths are different; and
a detecting device that detects optical signals for each spectral line separated by the separating device.

5. The optical communication system of claim 4, wherein the optical receivers are structured so as to receive the multiplex spectral line at a side of the light transmission path.

6. An optical transceiver for use with an optical communication method for carrying out communications by superimposing a plurality of spectral lines whose wavelengths are different through a light transmission path, comprising:
a light source that emits natural light;
a modulating device that modulates an intensity of the natural light the light source emits based on transmission information; and an extracting device that extracts a spectral line of a specified wavelength from the natural light; and
wherein the optical transceiver is structured to transmit optical signals by the spectral line of the specified wavelength modulated by the modulating device and extracted by the extracting device through the light transmission path.

7. An optical receiver for use with an optical communication method for carrying out communications by transmitting a multiplex spectral line in which a plurality of spectral lines whose wavelengths are different are superimposed through a light transmission path, comprising:
a light receivingpart that receives the multiplex spectral line transmitted through the light transmission path;
a separating device that separates the multiplex spectral line received by the light receiving part into a plurality of spectral lines whose wavelengths are different; and
a detecting device that detects optical signals for each spectral line separated by the separating device.

8. The optical receiver of claim 7, wherein the optical receiver is structured so as to receive the multiplex spectral line at a side of the light transmission path.

9. An optical fiber for use with an optical communication method for carrying out communications by transmitting a plurality of spectral lines whose wavelengths are different through a light transmission path, comprising:
a first light transmission path that transmits first optical signals by a spectral line of a specified single wavelength;
a second light transmission path that transmits second optical signals by a spectral line of another specified single wavelength or a plurality of wavelengths; and
a third light transmission path that communicates the first light transmission path and the second light transmission path and transmits third optical signals by a multiplex spectral line in which the first optical signals and the second optical signals are superimposed; and
wherein the third light transmission path is formed such that a core diameter and a clad diameter are gradually reduced toward downstream of a transmission direction of the optical lights by the multiplex spectral line.

10. The optical fiber of claim 9, wherein the third light transmission path is formed such that, at a most upstream portion in the transmission direction of the optical signals by the multiplex spectral line, its core diameter is greater than a core diameter of the first light transmission path and a core diameter of the second light transmission path, and its clad diameter is greater than a clad diameter of the first light transmission path and a clad diameter of the second light transmission path.

11. The optical fiber of claim 9 or 10, wherein the third light transmission path is formed such that its core diameter is reduced with a ratio of about 12.5 µm or less to a length of 1 m of the transmission direction.
